# EUROPÄISCHE PATENTSCHRIFT

(11) **EP 4 319 102 B1**
(45) Veröffentlichungstag und Bekanntmachung des Hinweises auf die Patenterteilung: **16.04.2025**
(21) Anmeldenummer: 22188891.0
(22) Anmeldetag: 04.08.2022
(51) Int. Cl.: H04L 67/12, G05B 19/418, H04L 69/00

(54) **KOMMUNIKATION EINES FERNBEDIENUNGSTERMINALS AUF BASIS EINES MODULE TYPE PACKAGES**
COMMUNICATION OF A REMOTE CONTROL TERMINAL BASED ON A MODULE TYPE PACKAGE
COMMUNICATION D'UN ÉQUIPEMENT TERMINAL DE TÉLÉCOMMANDE BASÉE SUR UN PAQUET DE TYPE MODULE

(43) Veröffentlichungstag der Anmeldung: 07.02.2024
(73) Patentinhaber: Siemens Aktiengesellschaft, 80333 München (DE)
(72) Erfinder: ROMBERG, Thomas, 75245 Neulingen (DE); STUTZ, Andreas, 76344 Eggenstein-Leopoldshafen (DE); SCHNELLER, Martin, 76297 Stutensee (DE); GRIESSBAUM, Jakob, 76761 Rülzheim (DE); STUBBE, Felix, 76137 Karlsruhe (DE); KRAUSE, Markus, 91093 Heßdorf (DE)
(74) Vertreter: Siemens Patent Attorneys

(56) Entgegenhaltungen:
- EP-A1- 2 988 183
- EP-A1- 3 995 920
- WO-A1-2022/155356
- WO-A1-2022/262973
- WO-A1-2022/262993
- DE-C1- 19 904 331
- US-A1- 2021 132 562

## Beschreibung

Die Erfindung betrifft ein Verfahren zum Erzeugen einer Automatisierung für ein Fernbedienungsterminal. Außerdem betrifft die Erfindung ein Verfahren zum Betreiben eines Funktionsmoduls in einer technischen Anlage. Außerdem betrifft die Erfindung ein computerimplementiertes Projektierungswerkzeug, einen Engineering Station Server, ein Leitsystem für eine technische Anlage und ein computerlesbares Medium.

Kritische Infrastruktursysteme wie Verteilnetze für Wasser, Wärme, Strom, Gas und Wasserstoff stellen besondere Platzanforderungen an die Automatisierungstechnik aufgrund der notwendigen Verfügbarkeit und der großen räumlichen Verbreitung. Diese Netzwerke bestehen aus Pipelines, die dezentrale Verteilungszentren über Hunderte von Kilometern miteinander verbinden und damit ein Mesh-Netzwerk von Verteilzentren und Verbindungsleitungen schaffen.

In Stationen entlang der Rohrleitungen und an Anschlüssen werden Betriebsparameter kontrolliert und beeinflusst. Diese Stationen sind systemrelevant und so automatisiert, dass sie kein Personal vor Ort bedürfen. Zum Bedienen und Beobachten dieser Systeme sind diese an ein zentrales Steuerungs- und Überwachungssystem angeschlossen. Die Systeme werden auch als Remote Terminal Units (RTU) oder Fernbedienungsterminals bezeichnet.

Diese Fernbedienungsterminals sind meist weit entfernt von bewohnten Gebieten und daher nicht immer mit einer stabilen Kommunikation erreichbar. Für den Anschluss solcher Fernbedienungsterminals wurden spezielle Fernwirkprotokolle festgelegt, die dafür ausgelegt sind, die Robustheitsanforderungen für den Anschluss der Fernbedienungsterminals zu erfüllen.

In der Vergangenheit spielte die Integration solcher Fernbedienungsterminals eher eine untergeordnete Rolle bei Infrastrukturprojekten. Manuelle Projekt-Planungsschritte sind in diesem Bereich keine Seltenheit, da die Betriebszeit immer um ein Vielfaches länger war als die Projektdauer. In den letzten Jahren wurde in Diskussionen über die Energiewende jedoch zunehmend auf das Problem hingewiesen, dass viele Infrastrukturprojekte nach der Genehmigung und Baufreigabe zu lange dauern. Ein Harmonisierungsbedarf und eine Standardisierung von Schnittstellen zur Optimierung der Integrationsmöglichkeiten werden zukünftig immer wichtigere Rollen spielen. Die Photovoltaikindustrie, die Wasserstoffindustrie und die Systemdienstleistungsanbieter in der Energieübertragung stellen diese Forderung ebenfalls in ihren aktuellen Forschungsfahrplänen.

Die heutigen Integrationsworkflows bei Infrastrukturprojekten, die Fernbedienungsterminals betreffen, sind meist manuell oder nur teilweise automatisierte Prozesse. Der Umfang einer solchen Integration reicht von einzelnen Datenpunkten bis hin zu Bedienbildern und Alarmen. Aufgrund des hohen manuellen Anteils können Fehler während der Integration nicht vollständig ausgeschlossen werden. Aus diesem Grund sind umfangreiche Tests für jedes integrierte Fernbedienungsterminal erforderlich. Die Druckschrift WO2022155356 zeigt beispielhaft ein Fernbedienungsterminal für eine Abwasseranlage.

Der Erfindung liegt die Aufgabe zugrunde, eine Kommunikation eines Fernbedienungsterminals mit einem System zum Bedienen und Beobachten des Fernbedienungsterminals zu vereinfachen.

Diese Aufgabe wird gelöst durch ein Verfahren zum Erzeugen einer Automatisierung für ein Fernbedienungsterminal, bei dem durch ein computerimplementiertes Projektierungswerkzeug die Automatisierung für das Fernbedienungsterminal gemäß den Spezifikationen des VDI/VDE/NAMUR 2658 Standards erzeugt wird, um eine spätere Kommunikation des Fernbedienungsterminals mit einem Leitsystem für eine technische Anlage zur Bedienung und Beobachtung des Fernbedienungsterminals zu ermöglichen, wobei ein Datenkommunikationsteil der Automatisierung an die spezifischen Anforderungen einer Kommunikation des Fernbedienungsterminals mit externen Recheneinheiten angepasst wird, und wobei im VDI/VDE/NAMUR 2658 Standard vorgesehene bidirektionale Kommunikationsmechanismen durch jeweils zwei unidirektionale Kommunikationsmechanismen ersetzt werden.

Bei der technischen Anlage kann es sich um eine Anlage aus der Prozessindustrie wie beispielsweise eine chemische, pharmazeutische, petrochemische oder eine Anlage aus der Nahrungs- und Genussmittelindustrie handeln. Hiermit umfasst sind auch jegliche technischen Anlagen aus der Produktionsindustrie, Werke, in denen z.B. Autos oder Güter aller Art produziert werden. Windräder, Solaranlagen oder Kraftwerke zur Energieerzeugung sind ebenso von dem Begriff der technischen Anlage umfasst.

Unter einer "Automatisierung" wird dabei die selbständige (automatisierte) Erfassung und Beeinflussung physikalischer Größen mithilfe technischer Mittel, hier die Mittel des Fernbedienungsterminals, verstanden. Die Automatisierung umfasst wenigstens eine Parametrierung der Komponenten des Fernbedienungsterminals und eine Interaktion des Fernbedienungsterminals mit einer externen Recheneinheit wie einem Leitsystem einer technischen Anlage. Das Fernbedienungsterminal ist eine in sich abgeschlossene technische Einheit, die in eine Kommunikation mit einer übergeordneten Steuerungsebene des Leitsystems integrierbar ist.

Das Fernbedienungsterminal kann eine beliebige Kombination aus Einzelsteuerelementen, Sensoren oder Automatisierungskomponenten umfassen. Zudem können auch softwaretechnische Abbildungen von beispielsweise Einzelsteuerelementen Teil des Fernbedienungsterminals sein.

Die Automatisierung wird durch ein computerimplementiertes Projektierungswerkzeug erzeugt. Ein Beispiel hierfür ist das "Totally Integrated Automation Portal (TIA Portal)" der Firma Siemens. Die Erzeugung der Automatisierung erfolgt dabei derart, dass die erzeugte Automatisierung den Spezifikationen des VDI/VDE/NAMUR 2658 Standards folgt. Dies bedeutet insbesondere, dass eine Datenstruktur der Automatisierung sowie Regeln zur Kommunikation mit externen Kommunikationspartnern gemäß den Spezifikationen des VDI/VDE/NAMUR 2658 Standards aufgebaut sind. Dabei liegen die Spezifikationen zugrunde, die zum Anmeldetag bereits veröffentlicht worden sind. Der VDI/VDE/NAMUR 2658 Standard beschreibt dabei sogenannte "Module Type Packages (MTP)", die der Beschreibung einer Automatisierung für in sich geschlossene, modulare technische Einheiten dienen.

Die Automatisierung des Fernbedienungsterminals weist einen Datenkommunikationsteil auf, der einer Spezifikation eines Datenaustausch mit externen Kommunikationspartnern des Fernbedienungsterminals dient. Erfindungsgemäß werden die im VDI/VDE/NAMUR 2658 Standard vorgesehenen bidirektionalen Kommunikationsmechanismen durch jeweils zwei unidirektionale Kommunikationsmechanismen ersetzt. Gängige Kommunikationsmechanismen, die bislang für die Kommunikation von Fernbedienungsterminals verwendet wurde, nutzen unidirektionale Kommunikationsmechanismen, um Informationen von dem Fernbedienungsterminal zu einem System zum Bedienen und Beobachten zu übertragen. Die umgekehrte Übertragungsrichtung ist dabei bei Fernbedienungsterminals aufgrund der oftmals rauen Betriebsbedingungen schwierig, weshalb die Spezifikation einer bidirektionale Kommunikation nicht notwendig ist.

Die Erfindung löst das Problem, gängige Kommunikationsmechanismen für Fernbedienungsterminals mit dem bidirektionalen Charakter des Kommunikationsteils des VDI/VDE/NAMUR 2658 Standards zu vereinbaren, und vereinfacht dadurch die Kommunikation eines Fernbedienungsterminals mit einem System zum Bedienen und Beobachten des Fernbedienungsterminals.

Bevorzugt wird der Datenkommunikationsteil der Automatisierung an die Anforderungen des IEC 60870-5-104 Standards angepasst, bei dem die bidirektionalen Kommunikationsmechanismen durch unidirektionale Telegramme gemäß dem IEC 60870-5-104 Standard ersetzt werden.

Die zuvor erzeugte Automatisierung kann durch das computerimplementierte Projektierungswerkzeug automatisch auf das Fernbedienungsterminal übertragen werden, um das Fernbedienungsterminal anschließend bestimmungsgemäß betreiben zu können.

Dabei kann mithilfe der erzeugten und auf das Fernbedienungsterminal übertragenen Automatisierung eine Kommunikation mit dem Leitsystem zur Bedienung und Beobachtung des Fernbedienungsterminals eingerichtet werden.

Das Projektierungswerkzeug kann ein Teil des Leitsystems sein. Es kann sich aber auch um getrennte, eigenständige technische Einrichtungen handeln. Das Projektierungswerkzeug kann dabei beispielsweise von einem Hersteller des Fernbedienungsterminals verwendet werden, während ein Betreiber einer technischen Anlage, in welcher Informationen des Fernbedienungsterminals gesammelt und verwendet werden, das Leitsystem zum Bedienen und Beobachten (u.a. des Fernbedienungsterminals) nutzen kann.

Die zuvor formulierte Aufgabe wird zudem gelöst durch ein computerimplementiertes Projektierungswerkzeug, das das dazu ausgebildet ist, ein Verfahren wie zuvor erläutert auszuführen.

Die zuvor formulierte Aufgabe wird zudem gelöst durch einen Engineering Station Server, auf dem ein solches Projektierungswerkzeug computerimplementiert ist.

Die Aufgabe wird zudem gelöst durch ein Leitsystem für eine technische Anlage, welches zur Bedienung und Beobachtung wenigstens eines Fernbedienungsterminals ausgebildet ist, wobei das Leitsystem dazu ausgebildet ist, die, wie zuvor erläutert, erzeugte Automatisierung für die Bedienung und Beobachtung des Fernbedienungsterminals zu integrieren.

Außerdem wird die Aufgabe gelöst durch ein computerlesbares Medium, umfassend Befehle, die bei der Ausführung durch einen Computer diesen veranlassen, das Verfahren wie zuvor erläutert auszuführen.

## Patentansprüche

1. Verfahren zum Erzeugen einer Automatisierung für ein Fernbedienungsterminal, bei dem durch ein computerimplementiertes Projektierungswerkzeug die Automatisierung für das Fernbedienungsterminal gemäß den Spezifikationen des VDI/VDE/NAMUR 2658 Standards erzeugt wird, um eine spätere Kommunikation des Fernbedienungsterminals mit einem Leitsystem für eine technische Anlage zur Bedienung und Beobachtung des Fernbedienungsterminals zu ermöglichen, wobei ein Datenkommunikationsteil der Automatisierung an die spezifischen Anforderungen einer Kommunikation des Fernbedienungsterminals mit externen Recheneinheiten angepasst wird, und wobei im VDI/VDE/NAMUR 2658 Standard vorgesehene bidirektionale Kommunikationsmechanismen durch jeweils zwei unidirektionale Kommunikationsmechanismen ersetzt werden.

2. Verfahren nach Anspruch 1, bei dem der Datenkommunikationsteil der Automatisierung an die Anforderungen des IEC 60870-5-104 Standards angepasst wird und bei dem die bidirektionalen Kommunikationsmechanismen durch unidirektionale Telegramme gemäß dem IEC 60870-5-104 Standard ersetzt werden.

3. Verfahren nach Anspruch 1 oder 2, bei dem die erzeugte Automatisierung auf das Fernbedienungsterminal übertragen wird.

4. Verfahren nach Anspruch 3, bei dem mithilfe der erzeugten und auf das Fernbedienungsterminal übertragenen Automatisierung eine Kommunikation mit dem Leitsystem zur Bedienung und Beobachtung des Fernbedienungsterminals eingerichtet wird.

5. Computerimplementiertes Projektierungswerkzeug, das das dazu ausgebildet ist, ein Verfahren gemäß einem der Ansprüche 1 bis 3 auszuführen.

6. Engineering Station Server, auf dem ein Projektierungswerkzeug gemäß Anspruch 5 computerimplementiert ist.

7. Leitsystem für eine technische Anlage, welches zur Bedienung und Beobachtung wenigstens eines Fernbedienungsterminals ausgebildet ist, wobei das Leitsystem dazu ausgebildet ist, die gemäß Anspruch 1 oder 2 erzeugte Automatisierung für die Bedienung und Beobachtung des Fernbedienungsterminals zu integrieren.

8. Computerlesbares Medium, umfassend Befehle, die bei der Ausführung durch einen Computer diesen veranlassen, das Verfahren nach einem der Ansprüche 1 bis 3 auszuführen.

9. Computerlesbares Medium, umfassend Befehle, die bei der Ausführung durch einen Computer diesen veranlassen, das Verfahren nach Anspruch 4 auszuführen.

## Claims

1. Method for generating automation for a remote terminal unit, in which automation for the remote terminal unit is generated by a computer-implemented configuration tool in conformance with the specifications of the VDI/VDE/NAMUR 2658 standard, to enable later communication of the remote terminal unit with a control system for an industrial plant for the operation and monitoring of the remote terminal unit, wherein a data communications part of the automation is adapted to the specific requirements of communication of the remote terminal unit with external computing units, and wherein bidirectional communication mechanisms provided for in the VDI/VDE/NAMUR 2658 standard are replaced by in each case two unidirectional communication mechanisms.

2. Method according to claim 1, in which the data communications part of the automation is adapted to the requirements of the IEC 60870-5-104 standard, and in which the bidirectional communication mechanisms are replaced by unidirectional telegrams in conformance with the IEC 60870-5-104 standard.

3. Method according to claim 1 or 2, in which the generated automation is transferred to the remote terminal unit.

4. Method according to claim 3, in which communication with the control system for the operation and monitoring of the remote terminal unit is set up with the aid of the generated automation that has been transferred to the remote terminal unit.

5. Computer-implemented configuration tool that is constructed to carry out a method according to one of claims 1 to 3.

6. Engineering station server on which a configuration tool according to claim 5 is implemented by computer.

7. Control system for an industrial plant, which is constructed to operate and monitor at least one remote terminal unit, wherein the control system is constructed to integrate the automation that is generated according to claim 1 or 2 for the operation and monitoring of the remote terminal unit.

8. Computer-readable medium, comprising commands which, when executed by a computer, cause the computer to carry out the method according to one of claims 1 to 3.

9. Computer-readable medium, comprising commands which, when executed by a computer, cause the computer to carry out the method according to claim 4.

## Revendications

1. Procédé de production d'une automatisation pour un terminal de télécommande, dans lequel, par un outil d'étude mis en œuvre par ordinateur, on produit l'automatisation pour le terminal de télécommande suivant les spécifications de la norme VDI/VDE/NAMUR 2658, afin de commander une communication ultérieure du terminal de télécommande avec un système de conduite d'une installation technique et de rendre possible la commande et l'observation du terminal de télécommande, dans lequel on adapte, par une unité informatique extérieure, une partie de communication de données de l'automatisation aux exigences spécifiques d'une communication du terminal de télécommande avec des unités informatiques extérieures, et dans lequel on remplace des mécanismes de communication bidirectionnels prévus dans la norme VDI/VDE/NAMUR 2658 par respectivement deux mécanismes de communication monodirectionnels.

2. Procédé suivant la revendication 1, dans lequel on adapte la partie de communication de données de l'automatisation aux exigences de la norme IEC 60870-5-104 et dans lequel on remplace les mécanismes de communication bidirectionnels par des télégrammes monodirectionnels suivant la norme IEC 60870-5-104.

3. Procédé suivant la revendication 1 ou 2, dans lequel on transfère l'automatisation produite au terminal de télécommande.

4. Procédé suivant la revendication 3, dans lequel, à l'aide de l'automatisation produite et transférée au terminal de télécommande, on établit une communication avec le système de conduite pour la commande et l'observation du terminal de télécommande.

5. Outil d'étude, mis en œuvre par ordinateur, qui est constitué pour exécuter un procédé suivant l'une des revendications 1 à 3.

6. Engineering station server, sur lequel est mis en œuvre par ordinateur un outil d'étude suivant la revendication 5.

7. Système de conduite d'une installation technique, qui est constitué pour la commande et l'observation d'au moins un terminal de télécommande, dans lequel le système de conduite est constitué pour intégrer une automatisation, produite suivant la revendication 1 ou 2, pour la commande et l'observation du terminal de télécommande.

8. Support, déchiffrable par ordinateur, comprenant des instructions qui, lors de l'exécution par un ordinateur, font que celles-ci exécutent le procédé suivant l'une des revendications 1 à 3.

9. Support, déchiffrable par ordinateur, comprenant des instructions qui, lors de l'exécution par un ordinateur, font que celles-ci exécutent le procédé suivant la revendication 4.
